# EUROPÄISCHE PATENTSCHRIFT

(11) **EP 3 807 556 B1**
(45) Veröffentlichungstag und Bekanntmachung des Hinweises auf die Patenterteilung: **15.03.2023**
(21) Anmeldenummer: 19724438.7
(22) Anmeldetag: 14.05.2019
(51) Int. Cl.: F16H 25/22, B62D 3/02, B62D 5/04, F16H 25/20

(54) **ROLLENGEWINDETRIEB FÜR EINEN AKTUATOR EINER STEER-BY-WIRE-LENKUNG SOWIE EINE STEER-BY-WIRE-LENKUNG**
ROLLER SCREW DRIVE FOR AN ACTUATOR OF STEER-BY-WIRE STEERING, AND A STEER-BY-WIRE STEERING
ENTRAÎNEMENT À BROCHE ET ROULEAUX POUR UN ACTIONNEUR D'UNE DIRECTION STEER-BY-WIRE AINSI QU'UNE DIRECTION STEER-BY-WIRE

(30) Priorität: 18.06.2018 DE 102018209820
(43) Veröffentlichungstag der Anmeldung: 21.04.2021
(73) Patentinhaber: ZF Friedrichshafen AG, 88046 Friedrichshafen (DE)
(72) Erfinder: KLANK, Michael, 49084 Osnabrück (DE); HAEGELE, Alexander, 49594 Alfhausen (DE)
(74) Vertreter: ZF Friedrichshafen AG
(86) Internationale Anmeldenummer: PCT/EP2019/062250
(87) Internationale Veröffentlichungsnummer: WO 2019/242936

(56) Entgegenhaltungen:
- EP-A1- 0 320 621
- EP-A1- 1 110 846
- EP-B1- 0 320 621
- WO-A1-95/08860
- DE-A1-102015 200 611
- DE-A1-102017 128 514

## Beschreibung

Die Erfindung betrifft einen Spindelantrieb für einen Aktuator einer steer-by-wire-Lenkung sowie eine steer-by-wire-Lenkung nach den Oberbegriffen der unabhängigen Ansprüche.

Die DE 10 2009 040 606 A1 offenbart einen Planetenwälzgewindetrieb, der mit einer Vielzahl von über den Umfang verteilt angeordneten Planetenrollen versehen ist, die in Wälzeingriff mit einer Gewindespindel sowie einer Spindelmutter stehen. Die Gewindespindel weist eine Vielzahl von schraubenförmig um die Spindelachse gewundene Windungen auf, die wenigstens eine Gewinderille aufweisen. Die Spindelmutter ist an ihrem Innenumfang mit einem mutterseitigen Profil versehen, wobei das planetenseitige Profil der Planetenrollen in Wälzeingriff mit dem mutterseitigen Profil steht. Das planetenseitige Profil ist durch ringförmig geschlossene Rillen gebildet, die quer zur Planetenachse angeordnet sind. Die Planetenrollen laufen auf Planetenbahnen, die quer zur Spindelachse angeordnet sind. Die Herstellung des Gewindes der Spindel unterliegt Toleranzen, deren Einhaltung mit hohen Kosten verbunden sein kann.

EP 1 110 846 A1 offenbart einen Spindelantrieb für einen Aktuator einer steer-by-wire-Lenkung, aufweisend eine Spindel, welche in einer Spindelmutter linear verlagerbar angeordnet ist, wobei der Spindelantrieb als Rollengewindetrieb mit Gewinderollen ausgebildet ist. Die Enden der Gewinderollen sind mit einer Außenverzahnung ausgebildet und kämmen jeweils mit einer Innenverzahnung jeweils eines Zahnkranzes, wobei die Zahnkränze stirnseitig innerhalb der Spindelmutter angeordnet sind und wobei die zumindest eine Gewinderolle radial und axial durch innerhalb der Spindelmutter angeordnete Synchronringe geführt ist.

Aus EP 0 320 621 A1 und DE 102015 200 611 A1 sind weitere Rollengewindetriebe bekannt.

Es ist eine Aufgabe der Erfindung, eine verbesserte und kostengünstigere Alternative für einen Spindelantrieb aufzuzeigen.

Die Erfindung betrifft einen Spindelantrieb für einen Aktuator einer steer-by-wire-Lenkung, aufweisend eine Spindel, welche in einer Spindelmutter linear verlagerbar angeordnet ist und welche ein Bewegungsgewinde bilden. Die Spindelmutter ist ortsfest in einem Aktuator angeordnet und dort drehbar gelagert. Der Spindelantrieb ist als Rollengewindetrieb mit zumindest einer Gewinderolle ausgebildet, wobei die Enden der zumindest einen Gewinderolle mit einer Außenverzahnung ausgebildet sind und die jeweils mit einer Innenverzahnung jeweils eines Zahnkranzes kämmen. Die Zahnkränze sind an der Stirnseite, vorzugsweise innerhalb, der Spindelmutter angeordnet, wobei die zumindest eine Gewinderolle radial und axial durch innerhalb der Spindelmutter angeordnete Synchronringe geführt ist. Die Synchronringe sind als Scheiben ausgebildet, die ein oder mehrere Löcher, bevorzugt Bohrungen, aufweist, welche konzentrisch zur Längsachse der Scheibe und somit auch konzentrisch zur Längsachse der Spindelmutter ausgebildet sind.

Die Erfindung zeichnet sich dadurch aus, dass die Spindel in Längsrichtung gleichmä-βig voneinander beabstandete Rillen aufweist und die zumindest eine Gewinderolle ein Außengewinde aufweist. Die Rillen sind konzentrisch um die Längsachse der Spindel angeordnet. Die Spindel selbst weist also keine umlaufenden Windungen wie die Gewinderollen auf. Die Rillen haben keine Steigung bzw. deren Steigung ist null. Das Außengewinde der Gewinderolle ist mit den gleichmäßig auf der Gewindespindel verteilten Rillen permanent in Wälzeingriff, so dass durch die Drehung der Spindelmutter eine Linearverlagerung der Spindel erfolgt. Eine Spindel mit gleichmäßig voneinander beabstandeten Rillen kann kostengünstig mittels eines Rollverfahrens hergestellt werden. Die Herstellung ist hinsichtlich der Einhaltung von Toleranzen einfacher und somit kostengünstiger, als wenn mehrere Planetenrollen mit gleichmäßig voneinander beabstandeten Rillen hergestellt werden müssen, weil nur ein Bauteil - die Spindel - Rillen aufweist. Die für einen Aktuator einer steer-by-wire-Lenkung geeignete Spindel lässt sich in einem Arbeitsgang herstellen. Dabei lassen sich hohe Genauigkeiten erzielen, so dass die Rillen jeweils einen gleichen Abstand voneinander haben und eine gleiche Tiefe aufweisen. Dieses ist sehr wichtig, da die zumindest eine Gewinderolle gleichmäßig in Eingriff mit der Spindel sein muss, um einen reibungsarmen Betrieb zu gewährleisten.

Die Gewinderolle umläuft die Spindel auf einer konzentrisch zur Längsachse der Spindel ausgebildeten Bahn, quasi wie ein Planet bei einem Planetengetriebe. Die Längsachse der Spindelmutter fällt mit der Längsachse der Spindel zusammen. Statt einer Gewinderolle können bei Bedarf, z. B. wenn es die axiale Last auf die Spindel erfordert, auch zwei oder mehr Gewinderollen eingesetzt werden. Die Führung der zumindest einen Gewinderolle auf der konzentrischen Bahn wird durch die vorgenannten Synchronringe gewährleistet. Stirnseitig der Außenverzahnung an der zumindest einen Gewinderolle ist an dieser jeweils ein Zapfen angeordnet. Dieser hervorstehende Zapfen greift in ein Sackloch oder Durchgangsloch des jeweiligen Synchronrings. Der Synchronring ist form- und/oder kraftschlüssig in der Spindelmutter festgelegt. Die Synchronringe können beispielsweise in die Spindelmutter eingeschraubt sein. Alternativ sind die Synchronringe in einen Absatz eingesetzt und die Stirnseiten der Spindelmutter sind an einer oder mehreren Stellen verformt, zum Beispiel umgebördelt, so dass die Synchronringe eine verdrehfeste Position innerhalb der Spindelmutter einnehmen. Die Synchronringe sind mit ihren Bohrungen oder Sacklöchern zueinander derart positioniert, dass die Längsachsen der Durchgangslöcher beziehungsweise Sacklöcher zusammenfallen und parallel zur Längsachse der Spindelmutter beziehungsweise der Spindel angeordnet sind. Die zumindest eine oder mehreren Längsachsen durch die Durchgangslöcher oder Sacklöcher laufen bei Drehung um die Spindelmutter konzentrisch zur Längsachse der Spindelmutter. Ein Verkanten der Gewinderolle beim Umlaufen der Spindel ist somit ausgeschlossen. Die zylindrische Innenwand der Spindelmutter weist kein Gewinde auf. Bei Drehung der Spindelmutter wird die Drehung der zumindest einen Gewinderolle durch deren Außenverzahnung bewirkt, wenn sich diese jeweils an der Innenverzahnung der Zahnkränze abwälzen.

Die zumindest eine Gewinderolle hat ein Außengewinde mit einer schraubenförmig um die Längsachse der Gewinderolle verlaufenden Windung. Das Gewinde hat eine Steigung, welche je nach erforderlicher Übersetzung ausgelegt ist. Angenommen es soll bei einer Umdrehung der Spindelmutter eine axiale Verlagerung der Spindel um 1 mm erreicht werden, dann würde bei einer Übersetzung von 4:1 bei der zumindest einen Gewinderolle eine Steigung von 0,25 mm benötigt. Diese Annahme ist lediglich beispielhaft und schränkt den Gegenstand der Erfindung nicht grundsätzlich auf dieses Übersetzungsverhältnis ein.

Nach einer bevorzugten Ausführungsform wird die Spindelmutter mittels eines zur Spindel und zur Spindelmutter koaxial angeordneten elektrischen Motors angetrieben. Ein koaxialer elektromotorischer Antrieb ist in erster Linie vorteilhaft hinsichtlich des Bauraums. Beim koaxialen Antrieb liegen die Längsachsen des Motors und der Spindel beziehungsweise der Spindelmutter aufeinander bzw. es gibt eine gemeinsame Längsachse. Bevorzugt kann der Antrieb derart ausgebildet werden, dass die Spindelmutter den Rotor des elektrischen Motors bildet. Hierdurch kann hinsichtlich des Bauraums nochmals Platz gespart werden, weil ansonsten der Rotor des elektrischen Motors noch außerhalb der Spindelmutter aufbauen würde. Der Vorteil ist eine weitere Bauraumreduzierung.

In einer alternativen Ausführungsform wird die Spindelmutter mittels eines zur Spindel und zur Spindelmutter achsparallel angeordneten elektrischen Motors angetrieben. Hierzu ist auf der Antriebsachse des Motors ein Antriebsritzel angeordnet und auf der Spindelmutter ist ein Riemenrad angeordnet. Bevorzugt weisen das Motorritzel und das Riemenrad die gleiche Verzahnung auf, so dass ein schlupffreier Antrieb ermöglicht werden kann, wenn ein Zahnriemen das Antriebsritzel und das Riemenrad umschlingt. Auch diese Art der Anordnung kann vorteilhaft sein, wenn hinsichtlich der Länge kein Platz für einen koaxialen Motorantrieb vorhanden ist und somit auf die achsparallele Anordnung ausgewichen werden muss. Bei der achsparallelen Anordnung kann der Motor Teil des Gehäuses des Aktuators sein oder aber separat mit diesem verschraubt sein, wobei der Elektromotor dann ein eigenes Gehäuse aufweist. Statt des vorgenannten Riemenantriebes kann auch ein Rädergetriebe zum Einsatz kommen. Die Anordnung wäre dann derart, dass das Motorritzel direkt mit einem Zahnrad auf der Spindelmutter kämmt oder aber gegebenenfalls noch ein oder weitere Zahnräder zwischengeschaltet sind.

Für die beiden vorbenannten elektromotorischen Antriebe wird in einer bevorzugten Ausführungsform ein bürstenloser Vernier-Motor verwendet. Diese Art von Elektromotoren bilden ein im hohen Maße effizienten Elektromotor aus, der im Vergleich zu herkömmlichen Elektromotoren eine verbesserte Volumeneffizienz aufweist. Ein Vernier-Motor kann bei geringerem Volumen ein höheres Drehmoment erzeugen als ein herkömmlicher Elektromotor mit entsprechend größerem Volumen. Mit anderen Worten kann ein Elektromotor verkleinert werden und gleichzeitig die gleiche oder sogar eine höhere Leistung aufweisen als der herkömmliche E-Motor. Oder es kann die gleiche Größe wie bei einem herkömmlichen Elektromotor beibehalten werden und die Leistung nimmt beträchtlich zu. Durch den Einsatz des Vernier-Motors kann somit der Spindelantrieb und insgesamt die steer-by-wire-Lenkung sehr kompakt gebaut werden, so dass der benötigte Bauraum enorm reduziert werden kann. Der Vernier-Motor ist nicht nur kleiner als ein vergleichbarer Elektromotor. Er ist auch leichter und leistungseffizienter als ein vergleichbarer herkömmlicher Elektromotor mit ausreichend Drehmoment zum Antrieb des Spindelantriebs, insbesondere bei einer Hinterachslenkung. Durch die spezielle Bauart des Vernier-Motors kann nämlich das Gewicht der verwendeten Magnete (Permanentmagnete) erheblich reduziert werden. Damit ist der Vernier-Motor in dieser Hinsicht kostengünstiger. Ein weiterer Vorteil des Vernier-Motors ist der geringere Energiebedarf, weil durch diesen insgesamt weniger Energie aus dem Bordnetz des Kraftfahrzeuges entnommen wird, als bei Einsatz eines herkömmlichen Elektromotors. Dieser Vorteil kommt der Nutzung von bestehenden Bordnetzen zu Gute, die nicht verstärkt werden müssen.

In einer weiteren bevorzugten Ausführungsform ist zur Festlegung des Spindelantriebes eine Hemmeinrichtung vorgesehen. Die Hemmeinrichtung ist vorzugsweise elektromagnetisch ausgeführt, so dass die Hemmeinrichtung eine form- und/oder kraftschlüssige Kopplung zwischen Spindelmutter und einem Aktuator bewirkt. Die elektromagnetische Hemmeinrichtung ist bevorzugt derart ausgestaltet, dass in einem Fehlerfall, in dem der Elektromagnet stromlos ist, mittels einer Feder die Hemmeinrichtung geschaltet wird. Mit anderen Worten wird bei Bestromen eines Elektromagneten die Hemmeinrichtung entriegelt bzw. ausgeschaltet, so dass die Spindelmutter frei drehen kann. Mit einer Hemmeinrichtung soll im Fehlerfall ein Verstellen des Spindelantriebes und somit ein selbsttätiges Verstellen der Räder einer Fahrzeugachse verhindert werden. Gleicherma-βen soll mit der Hemmeinrichtung ein selbsttätiges Wandern des Spindelantriebes und somit der Lenkung aufgrund dynamischer Lasten verhindert werden. Dynamische Lasten können z.B. bei einer Schlechtwegstrecke aufgrund von Fahrzeugbewegungen bzw.

starken Einfederbewegungen der Räder auftreten. Denkbar ist bei der Hemmreinrichtung ebenfalls ein Reibschluss bzw. annähernder Reibschluss in Form von Bremsen des Spindelantriebes. Es kann somit die Stellbewegung verlangsamt werden oder schlagartig blockiert werden.

Für den Spindelantrieb ist ein geräuscharmer Betrieb von Vorteil, da sich über das Fahrwerk Geräusche des Motors beziehungsweise des Spindelantriebs in die Karosserie somit für die Insassen hörbar übertragen kann. Bevorzugt ist der Rollengewindetrieb spielfrei ausgebildet, so dass insbesondere beim Drehrichtungswechsel des Antriebes und somit der Spindelmutter keine Geräusche in die Karosserie übertragen werden. Es können hierzu an den Stirnseiten der zumindest einen Gewinderolle Federscheiben oder Anlaufscheiben angeordnet sein, so dass eine spielbehaftete Axialbewegung der zumindest einen Gewinderolle gegenüber der Spindelmutter ausgeschlossen ist.

Die Erfindung betrifft des Weiteren eine steer-by-wire-Lenkung, vorzugsweise Hinterachslenkung, welche mit einem Spindelantrieb wie zuvor beschrieben ausgebildet ist. Bei einer steer-by-wire-Lenkung besteht keine mechanische Verbindung zwischen dem Lenkrad des Fahrers und einer solchen Lenkung. Vielmehr werden Lenkeingaben des Fahrers über ein Steuergerät als Signal an die steer-by-wire-Lenkung gegeben, welche aufgrund dieses Signals eine Veränderung des Radlenkwinkels an der betreffenden Fahrzeugachse durchführt.

Die Erfindung wird nachfolgend anhand bevorzugter Ausführungsformen unter Bezugnahme auf die Zeichnung beschrieben. In der Zeichnung zeigen:
- Fig. 1: eine Draufsicht auf eine schematische Darstellung einer Hinterachse mit einem Aktuator mit einem erfindungsgemäßen Spindelantrieb,
- Fig. 2: eine schematische Darstellung eines Aktuators einer steer-by-wire-Lenkung mit einem erfindungsgemäßen Spindelantrieb,
- Fig. 3: eine Explosionsdarstellung eines Planeten-Rollengewindetriebs,
- Fig. 4: eine schematische und teilgeschnittene Darstellung eines erfindungsgemäßen Spindelantriebs,
- Fig. 5: einen Aktuator einer steer-by-wire-Lenkung mit einem erfindungsgemäßen Spindelantrieb

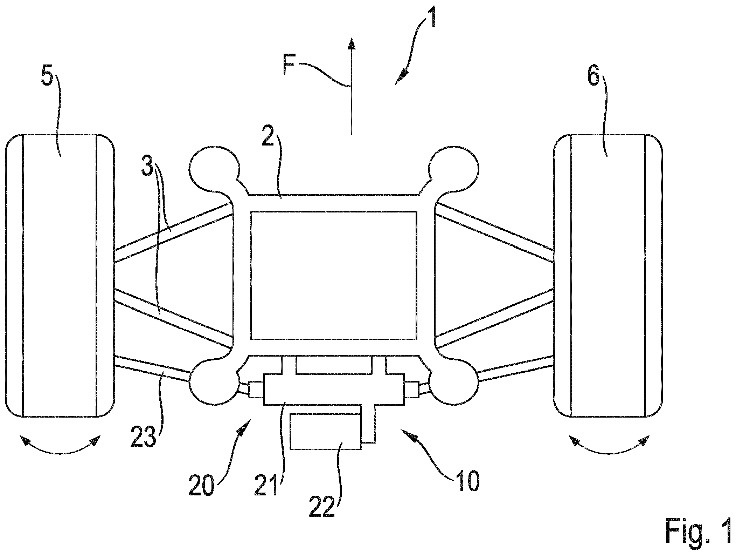

In der schematischen Darstellung gemäß Figur 1 ist eine Fahrzeugachse 1 gezeigt, hier dargestellt als eine Hinterachse mit einem Hilfsrahmen 2, der an einem Fahrzeugaufbau befestigt ist bzw. diesen bildet und mit der Karosserie eines Kraftfahrzeuges verbunden ist. Die Räder 5 und 6 sind mittels Lenkern 3 an dem Hilfsrahmen 2 angelenkt. Die Lenker 3 bilden die Radaufhängung für die Räder 5, 6 und führen diese. An dem Hilfsrahmen 2 ist ein Aktuator 10 einer steer-by-wire-Lenkung befestigt. Der Aktuator 10 ist mit seinem Gehäuse 21 an dem Hilfsrahmen 2 befestigt. Der Aktuator 10 weist in der vorliegenden Ausführung als ein zentraler Aktuator eine durchgehende Spindel 27 auf, welche durch das Gehäuse 21 des Aktuators 10 hindurchgeführt ist. Der Antriebsmotor 22 ist achsparallel zur Spindel 27 angeordnet. An den Enden der Spindel 27 sind Spurstangen 23 angelenkt, welche mit dem von dem Aktuator 10 abgewandten Ende jeweils mit dem nicht dargestellten Radträger der Räder 5 und 6 gelenkig verbunden sind. Es ist offensichtlich, dass bei einer axialen Verlagerung der Spindel 27 in die linke oder rechte Richtung eine Veränderung des Radlenkwinkels erfolgt, weil die Spurstangen 23 eine Zwangsverbindung zwischen Rad bzw. Radträger und dem Aktuator 10 darstellen. Zur Lenkung der Räder 5, 6 sind diese um deren Hochachse drehbar an der Radaufhängung 3 angelenkt, welches durch die gebogenen Doppelpfeile unterhalb der Räder 5, 6 angedeutet ist.

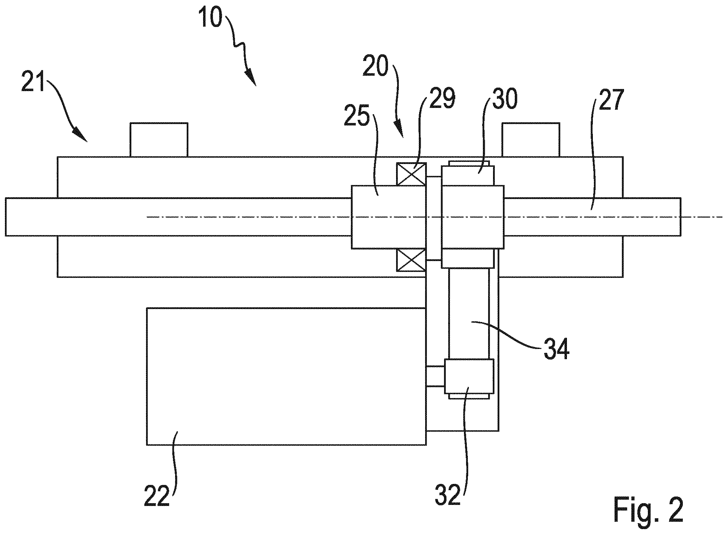

Figur 2 zeigt eine schematische Darstellung des in Figur 1 bereits gezeigten Aktuators 10. Der Aktuator 10 weist ein Gehäuse 21 auf, an dem achsparallel ein Antriebsmotor 22 angeordnet ist. In dem Gehäuse 21 ist der Spindelantrieb 20, bestehend aus der Spindelmutter 25 und der Spindel 27, angeordnet. Die Spindelmutter 25 ist gegenüber dem Gehäuse mit einem Wälzlager 29 ortsfest und drehbar gelagert. Durch die Spindelmutter 25 hindurchgeführt und koaxial zu dieser angeordnet ist die Spindel 27. Auf der von dem Wälzlager 29 abgewandten Seite der Spindelmutter 25 ist ein Riemenrad 30 ortsfest auf der Spindelmutter 25 angeordnet. Der Elektromotor 22 weist ein Antriebsritzel 32 auf. Ein Antriebsriemen 34 in Form eines Zahnriemens umschlingt sowohl das Antriebsritzel 32 als auch das Riemenrad 30, so dass bei Drehbewegung des Elektromotors bzw. Antriebsmotors 22 die Spindelmutter 25 in Drehbewegung um die Längsachse a versetzt wird. Je nach Drehrichtung der Spindelmutter 25 erfolgt eine lineare Verlagerung der Spindel 27 in die eine oder andere Richtung entlang der Längsachse a, wie durch den Doppelpfeil angedeutet.

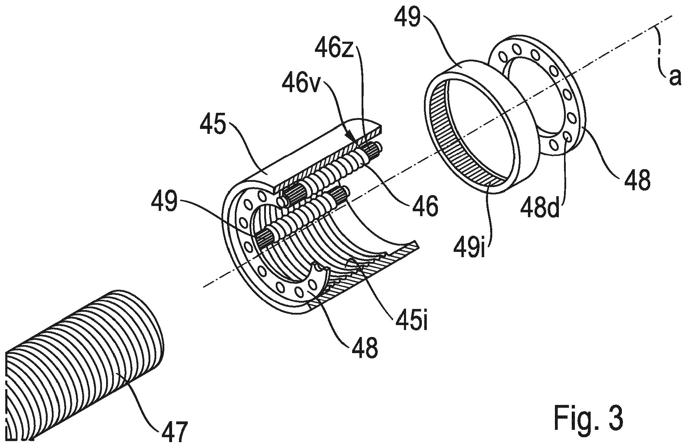

Figur 3 gibt Einblick in das Innenleben eines Planeten-Rollengewindetriebs. In der Explosionsdarstellung sind die Bauteile des Spindelantriebs 40 größtenteils separiert voneinander dargestellt. Zum einen ist die Gewindespindel 47 nicht in Eingriff mit der Spindelmutter 45 beziehungsweise den Planetenrollen zum anderen ist ein Zahnkranz 49 und ein Synchronring 48 ebenfalls im nichteingebauten Zustand dargestellt. Die Spindelmutter 45 ist in Figur 3 in Form eines außen glatten Zylinders gezeigt, der auf dem Innenmantel ein Gewinde aufweist. Links und rechts des Gewindes befindet sich in der Spindelmutter 45 ein Absatz, in den die Zahnkränze 49 beziehungsweise die Synchronringe 48 eingesetzt werden. Innerhalb des Innengewindes 45i sind Planetenrollen 46 angeordnet, welche in Eingriff mit dem Innengewinde 45i der Spindelmutter 45 sind. An den Enden der Gewinderolle 46 ist jeweils eine Verzahnung angeordnet, an die sich stirnseitig ein Zapfen 46z anschließt. Es ist zu erkennen, dass sich die gezahnten Enden 46z der Planetenrolle 46 mit der Innenverzahnung 49i der Zahnkränze 49 in Eingriff befinden. Eine radiale und auch axiale Führung wird durch die Synchronringe 48 erreicht. Diese weisen konzentrisch zur Längsachse a' angeordnete Durchgangslöcher 48d auf, in die die Zapfen 46z der Planetenrollen 46 eingreifen. Bei Drehung der Spindelmutter 45 um ihre Längsachse, welche mit der Längsachse der Gewindespindel 47 zusammenfällt (Längsachse a), wälzen sich die Planetenrollen 46 mit ihren Enden 46z an der Innenverzahnung 49a der Synchronringe 49 ab und wälzen sich ebenfalls mit ihrem Außengewinde an dem Innengewinde 45i der Spindelmutter 45 ab. Durch die Zwangsverbindung mit der Innenverzahnung 49i der Zahnkränze 49, welche ortsfest gegenüber der Spindelmutter 45 verbaut sind, ergibt sich durch Abwälzen der Planetenrollen 46 auf dem Außengewinde der Gewindespindel 47 eine Wandlung der Rotation der Spindelmutter 45 in eine lineare Bewegung der Gewindespindel 47 entlang ihrer Längsachse a'.

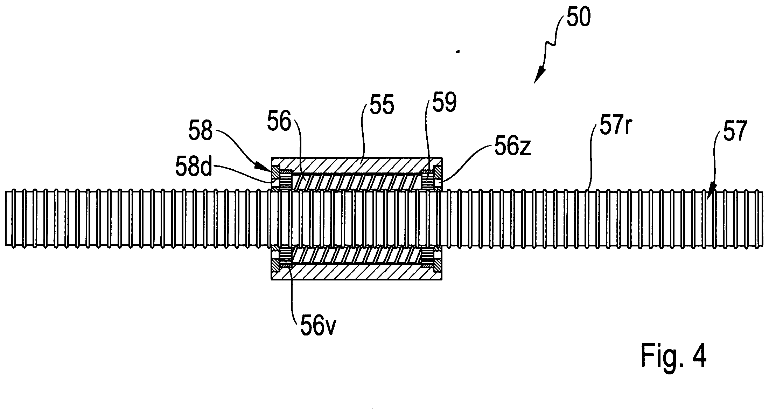

Figur 4 zeigt eine erfindungsgemäße Ausführung des Spindelantriebs 50. Im Gegensatz zu dem Planeten-Rollengewindetrieb aus dem Stand der Technik gemäß Figur 3 ist die Spindel 57 nicht mit einem Gewinde mit Steigung versehen, sondern die Spindel 57 weist gleichmäßig voneinander beabstandete Rillen 57r auf. Die Spindelmutter 55 ist geschnitten dargestellt und nimmt die Gewinderollen 56, die Zahnkränze 59 sowie die Synchronringe 58 auf. In den Synchronringen 58 sind Durchgangslöcher 58d angeordnet. Die Synchronringe 58 nehmen die stirnseitig angeordneten Zapfen 56z der Gewinderolle 56 auf. Die Synchronringe 58 sind derart in die Spindelmutter eingesetzt, dass die Durchgangslöcher 58d der Synchronringe 58 miteinander fluchten. Anders ausgedrückt stehen die Längsachsen der Gewinderollen 56 senkrecht zu den Synchronringen 58. Die Synchronringe 58 sind wie die Zahnkränze 59 verdrehsicher mit der Spindelmutter 55 gekoppelt. Das Außengewinde der Gewinderollen 56 greift mit seinen Gewindespitzen in die Rillen 57r der Spindel 57 ein. Wird nun die ortsfest gelagerte Spindelmutter 55 gedreht, angetrieben durch einen Elektromotor, so wälzen sich die Gewinderollen 56 auf der Spindel 57 ab, wobei die Drehbewegung der Gewinderollen 56 gegenüber der Spindelmutter 55 dadurch erzwungen wird, dass die Außenverzahnung 56v innerhalb der Innenverzahnung der Zahnkränze 59 abwälzt. Aufgrund der schraubenförmigen Bewegung der Gewinderolle 56 wird so eine Rotationsbewegung der Spindelmutter 55 in eine Translationsbewegung der Spindel 57 umgewandelt.

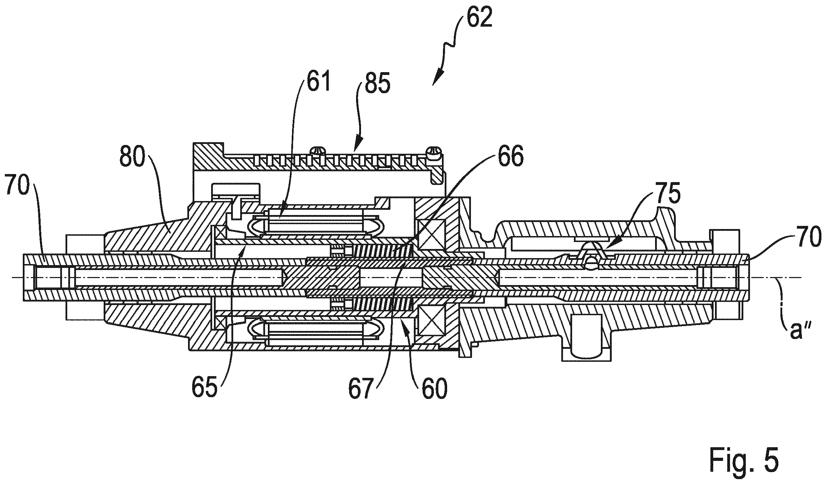

Figur 5 zeigt einen Aktuator 62 einer steer-by-wire-Lenkung. In der geschnittenen Darstellung ist ein Gehäuse 80 gezeigt, welches den Spindelantrieb 62 aufnimmt. Der Spindelantrieb 62 besteht aus der Spindelmutter 65 der Spindel 67 und den dazwischen kämmenden Gewinderollen 66. Die Spindelmutter 65 ist in dieser speziellen Ausführung als Rotor ausgebildet, also den drehenden Teil des Elektromotors, der hier als Vernier-Motor ausgebildet ist. Der Rotor beziehungsweise die Spindelmutter 65 wird durch wechselnde Magnetfelder am Stator 61 des Elektromotors angetrieben. Es handelt sich hierbei um einen koaxialen Antrieb bzw. eine koaxiale Anordnung von Motor und Spindelantrieb 60, auch Hohlwellenmotor genannt. Die Spindel 67 ist wie in Figur 4 gezeigt mit gleichmäßig beabstandeten Rillen ausgebildet, welche in Verbindung mit der drehangetriebenen Spindelmutter 65 und den Gewinderollen 66 in eine Translationsbewegung - in der Zeichnung gesehen links und rechts - verlagert werden kann. Die Spindel kann über eine Verdrehsicherung 75 an dem Gehäuse 80 abgestützt werden. Diese Verdrehsicherung 75 ist jedoch nicht zwingend, da die Spindel 67 Rillen aufweist und die Drehung der Spindelmutter kaum Einfluss auf die Spindel 67 hat - im Gegensatz zu einem Bewegungsgewindetrieb mit Trapezgewinde, wo aufgrund von Reibung die Spindel in hohem Maße zum Mitdrehen mit der Spindelmutter neigt. In die Spindel 67 sind stirnseitig Aufschraubzapfen 70 eingeschraubt, die aus dem Gehäuse 80 herausragen. Die Aufschraubzapfen 70 können beispielsweise Gelenkaufnahmen aufweisen, welche zur Verbindung mit einem Lenkgestänge einer Fahrzeugachse oder Gelenken an Radträgern verbunden sein können. Die Verbindung mit dem Lenkgestänge kann bei der Spindel mit Rillen eine ausreichende Verdrehsicherung bewirken. In das Gehäuse 80 ist außenseitig ein Steuergerät 85 integriert.

Der Aktuator 62 einer steer-by-wire-Lenkung stellt insgesamt eine kompakte Bauform dar, die wenig Bauraum beansprucht und so ideal in eine Fahrzeugachse mit lenkbaren Rädern integriert werden kann. Hierzu trägt ein Hohlwellenmotor bei, der insbesondere aufgrund seiner Ausbildung als Vernier-Motor ebenfalls wenig Bauraum benötigt.

Der Aktuator 62 zeigt einen beidseitig wirkenden oder auch Zentralsteller genannten Aktuator, mit welchem an einer Fahrzeugachse sich gegenüberliegende Räder gleichzeitig gelenkt werden können. Die Erfindung ist aber nicht auf einen solchen Zentralsteller beschränkt. Die gezeigte Bauform kann ebenfalls in einem Einzelsteller verwendet werden, der nur einem einzigen Rad zugeordnet ist und dieses zu lenken vermag.

### Bezugszeichen

- 1: Fahrzeugachse
- 2: Hilfsrahmen, Fahrzeugaufbau
- 3: Lenker, Radaufhängung
- 5: Rad
- 6: Rad
- 10: steer-by-wire-Lenkung, Aktuator

- 20: Spindelantrieb
- 21: Gehäuse
- 22: Antriebsmotor, Elektromotor
- 23: Spurstange
- 25: Spindelmutter
- 27: Spindel
- 29: Wälzlager
- 30: Riemenrad
- 32: Antriebsritzel
- 34: Antriebsriemen

- 40: Spindelantrieb
- 45: Spindelmutter
- 45i: Innengewinde
- 46: Gewinderolle
- 46v: Außenverzahnung
- 46z: Zapfen
- 47: Gewindespindel
- 48: Synchronring
- 48d: Durchgangslöcher
- 49: Zahnkranz
- 49a: Innenverzahnung
- 49i: Innenverzahnung
- 50: Spindelantrieb
- 55: Spindelmutter
- 56: Gewinderollen
- 56v: Außenverzahnung
- 56z: Zapfen
- 57: Spindel
- 57r: Rillen
- 58: Synchronringe
- 58d: Durchgangslöcher
- 59: Zahnkränze

- 60: Spindelantrieb
- 61: Stator
- 62: Aktuator
- 65: Spindelmutter/Rotor
- 66: Gewinderolle
- 67: Spindel
- 70: Aufschraubzapfen
- 75: Verdrehsicherung
- 80: Gehäuse
- 85: Steuergerät

- a: Längsachse
- a': Längsachse
- a": Längsachse

## Patentansprüche

1. Spindelantrieb (50, 60) für einen Aktuator (10) einer steer-by-wire-Lenkung, aufweisend eine Spindel (57, 67), welche in einer Spindelmutter (55) linear verlagerbar angeordnet ist, wobei der Spindelantrieb (50, 60) als Rollengewindetrieb mit zumindest einer Gewinderolle (56, 66) ausgebildet ist, wobei die Enden der zumindest einen Gewinderolle mit einer Außenverzahnung (56v) ausgebildet sind und jeweils mit einer Innenverzahnung (49i) jeweils eines Zahnkranzes (59) kämmen, wobei die Zahnkränze (59) stirnseitig innerhalb der Spindelmutter (55, 65) angeordnet sind, wobei die zumindest eine Gewinderolle (56, 66) radial und axial durch innerhalb der Spindelmutter (55) angeordnete Synchronringe (58) geführt ist, **dadurch gekennzeichnet, dass** die Spindel (57, 67) in Längsrichtung gleichmäßig voneinander beabstandete Rillen (57r) aufweist und die zumindest eine Gewinderolle (56, 66) ein Außengewinde aufweist, welches mit den Rillen der Gewindespindel (57, 67) permanent in Wälzeingriff ist, so dass durch die Drehung der Spindelmutter (55, 65) eine Linearverlagerung der Spindel (57, 67) erfolgt.

2. Spindelantrieb (50, 60) nach Anspruch 1, **dadurch gekennzeichnet, dass** die Spindelmutter (55, 65) mittels eines zur Spindel (57, 67) und zur Spindelmutter koaxial angeordneten elektrischen Motors (22) angetrieben wird.

3. Spindelantrieb (50, 60) nach Anspruch 2, **dadurch gekennzeichnet, dass** die Spindelmutter (55, 65) den Rotor des elektrischen Motors (22) bildet.

4. Spindelantrieb (50, 60) nach Anspruch 1, **dadurch gekennzeichnet, dass** die Spindelmutter (55, 65) mittels eines zur Spindel (57, 67) und zur Spindelmutter achsparallel angeordneten elektrischen Motors (22) angetrieben wird.

5. Spindelantrieb (50, 60) nach einem der vorhergehenden Ansprüche, **dadurch gekennzeichnet, dass** der elektrische Motor (22) in Form eines Vernier-Motors ausgebildet ist.

6. Spindelantrieb (50, 60) nach einem der vorhergehenden Ansprüche, **dadurch gekennzeichnet, dass** zur Festlegung des Spindelantriebs (50, 60) eine Hemmeinrichtung vorgesehen ist, vorzugsweise eine elektromagnetische Hemmeinrichtung, welche form- und/oder kraftschlüssig eine Kopplung zwischen Spindelmutter (55, 65) und einem Aktuator (10) bewirkt.

7. Spindelantrieb (50, 60) nach einem der vorhergehenden Ansprüche, **dadurch gekennzeichnet, dass** der Rollengewindetrieb spielfrei ausgebildet ist.

8. Steer-by-wire-Lenkung, vorzugsweise Hinterachslenkung, ausgebildet mit einem Spindelantrieb (50, 60) nach einem der vorhergehenden Ansprüche.

## Claims

1. Spindle drive (50, 60) for an actuator (10) of a steer-by-wire steering system, having a spindle (57, 67) which is disposed so as to be linearly displaceable in a spindle nut (55), wherein the spindle drive (50, 60) is configured as a roller screw drive having at least one threaded roller (56, 66), wherein the ends of the at least one threaded roller are configured having an external toothing (56v) and mesh in each case with an internal toothing (49i) of one respective gear rim (59), wherein the gear rims (59) are disposed on the end side so as to be within the spindle nut (55, 65), wherein the at least one threaded roller (56, 66) is guided radially and axially by synchronizer rings (58) disposed within the spindle nut (55), **characterized in that** the spindle (57, 67) has grooves (57r), which in the longitudinal direction are uniformly mutually spaced apart, and the at least one threaded roller (56, 66) has an external thread which permanently engages in a rolling manner with the grooves of the threaded spindle (57, 67) such that a linear displacement of the spindle (57, 67) takes place by rotating the spindle nut (55, 65) .

2. Spindle drive (50, 60) according to Claim 1, **characterized in that** the spindle nut (55, 65) is driven by means of an electric motor (22) which is disposed so as to be coaxial with the spindle (57, 67) and with the spindle nut.

3. Spindle drive (50, 60) according to Claim 2, **characterized in that** the spindle nut (55, 65) forms the rotor of the electric motor (22).

4. Spindle drive (50, 60) according to Claim 1, **characterized in that** the spindle nut (55,65) is driven by means of an electric motor (22) which is disposed so as to be axially parallel to the spindle (57, 67) and to the spindle nut.

5. Spindle drive (50, 60) according to one of the preceding claims, **characterized in that** the electric motor (22) is configured in the form of a Vernier motor.

6. Spindle drive (50, 60) according to one of the preceding claims, **characterized in that** a blocking installation, preferably an electromagnetic blocking installation, which in a form-fitting and/or force-fitting manner causes coupling between the spindle nut (55, 65) and an actuator (10) is provided for fixing the spindle drive (50, 60).

7. Spindle drive (50, 60) according to one of the preceding claims, **characterized in that** the roller screw drive is configured so as to be free of play.

8. Steer-by-wire steering system, preferably rear-axle steering system, configured having a spindle drive (50, 60) according to one of the preceding claims.

## Revendications

1. Entraînement à broche (50, 60) pour un actionneur (10) d'une direction steer-by-wire, présentant une broche (57, 67) qui est agencée dans un écrou de broche (55) de manière à pouvoir être déplacée linéairement, l'entraînement à broche (50, 60) étant réalisé sous forme d'entraînement fileté à rouleaux avec au moins un rouleau fileté (56, 66), les extrémités de l'au moins un rouleau fileté étant réalisées avec une denture extérieure (56v) et engrenant chacune avec une denture intérieure (49i) d'une couronne dentée (59) respective, les couronnes dentées (59) étant agencées frontalement à l'intérieur de l'écrou de broche (55, 65), l'au moins un rouleau fileté (56, 66) étant guidé radialement et axialement par des bagues de synchronisation (58) agencées à l'intérieur de l'écrou de broche (55), **caractérisé en ce que** la broche (57, 67) présente des rainures (57r) espacées de manière uniforme les unes des autres dans la direction longitudinale et l'au moins un rouleau fileté (56, 66) présente un filetage extérieur qui est en prise de roulement permanente avec les rainures de la broche filetée (57, 67), de telle sorte que la rotation de l'écrou de broche (55, 65) entraîne un déplacement linéaire de la broche (57, 67).

2. Entraînement à broche (50, 60) selon la revendication 1, **caractérisé en ce que** l'écrou de broche (55, 65) est entraîné au moyen d'un moteur électrique (22) agencé coaxialement à la broche (57, 67) et à l'écrou de broche.

3. Entraînement à broche (50, 60) selon la revendication 2, **caractérisé en ce que** l'écrou de broche (55, 65) forme le rotor du moteur électrique (22).

4. Entraînement à broche (50, 60) selon la revendication 1, **caractérisé en ce que** l'écrou de broche (55, 65) est entraîné au moyen d'un moteur électrique (22) agencé en parallélisme axial avec la broche (57, 67) et avec l'écrou de broche.

5. Entraînement à broche (50, 60) selon l'une quelconque des revendications précédentes, **caractérisé en ce que** le moteur électrique (22) est configuré sous la forme d'un moteur vernier.

6. Entraînement à broche (50, 60) selon l'une quelconque des revendications précédentes, **caractérisé en ce qu'**un dispositif d'arrêt est prévu pour fixer l'entraînement à broche (50, 60), de préférence un dispositif d'arrêt électromagnétique, qui provoque un couplage par complémentarité de forme et/ou à force entre l'écrou de broche (55, 65) et un actionneur (10).

7. Entraînement à broche (50, 60) selon l'une quelconque des revendications précédentes, **caractérisé en ce que** l'entraînement fileté à rouleaux est réalisé sans jeu.

8. Direction steer-by-wire, de préférence direction d'essieu arrière, réalisée avec un entraînement à broche (50, 60) selon l'une quelconque des revendications précédentes.
